Europäisches Patentamt

European Patent Office

Office européen des brevets

(19)

(11) Publication number: **0 444 329 A1**

## EUROPEAN PATENT APPLICATION

(21) Application number: 90202325.8

(22) Date of filing: 03.09.90

(51) Int. Cl.⁵: **H04N 5/44**, H04N 5/14

(43) Date of publication of application:
**04.09.91 Bulletin 91/36**

(84) Designated Contracting States:
**AT BE CH DE DK ES FR GB GR IT LI LU NL SE**

(71) Applicant: **N.V. Philips' Gloeilampenfabrieken**
**Groenewoudseweg 1**
**NL-5621 BA Eindhoven(NL)**

(72) Inventor: **de Haan, Gerard**
**c/o INT. OCTROOIBUREAU B.V., Prof.**
**Holstlaan 6**
**NL-5656 AA Eindhoven(NL)**
Inventor: **de Poortere, Gerrit Frederik**
**Magdalena**
**c/o INT. OCTROOIBUREAU B.V., Prof.**
**Holstlaan 6**
**NL-5656 AA Eindhoven(NL)**

(74) Representative: **van Gils, Cornelis Johannes**
**Maria et al**
**INTERNATIONAAL OCTROOIBUREAU B.V.**
**Prof. Holstlaan 6**
**NL-5656 AA Eindhoven(NL)**

(54) Improved image edge direction detection apparatus in video systems.

(57) In a video signal processing apparatus having an edge direction detector (22') to enable an edge direction dependent video signal processing, a post-filter (32, 34) is provided to filter output signals of the edge direction detector (22').

FIG.3

EP 0 444 329 A1

The present invention relates to video apparatus, and more particularly, to edge direction detectors thereof.

Although the present invention will be discussed relative to its main application, namely in TV scan conversion, other uses are not to be excluded.

It is well known that artefacts which arise due to an interlaced display standard, namely line-crawl and interline flicker, can be significantly reduced or eliminated by conversion to a progressive scan scheme. To form such a progressive scan, a line is added, by line repetition or interpolation between each pair of adjacent lines in each field of the interlaced system. A cost effective way of implementing an interpolation is use of a median filter. A median filter will operate well with respect to the step response and noise reduction. However, because in some known algorithms only vertical interpolation is used, the median filter creates disturbing serration effects along the edges of moving diagonal transitions. The visibility of this effect depends on e.g. the contrast in the scene and the display characteristics, and is generally quite visible on a twenty inch receiver or monitor. Since the display sizes of larger television sets substantially exceed this dimension, the above-mentioned effects are particularly disturbing.

A proposed solution to the above-stated problem given in an article "Progressive Scan Conversion Using Edge Information" by T. Doyle and M. Looymans, Proceedings of the Workshop on HDTV, Torino, 1989, sponsored by the IEEE, SMPTE et al., which is hereby incorporated by reference into the present application, is effective. However, the solution creates artefacts in picture areas having greater detail, as will be discussed below.

It is an object of the present invention to improve the performance of the above-described edge detectors in areas that contain high frequency detail.

It is a specific object of the present invention to decrease the high frequency artefacts generated by the relatively rapid switching from one direction to the other resulting from the pixel-based decisions of the known edge direction detector.

The present invention is a video apparatus having an edge direction detector furnishing at least a first and second edge direction signal each signifying the direction of a respective edge in a video image. It is characterized that a first and second numerical value are assigned to said first and second edge direction signal, respectively, and at least one filter is provided for filtering successive numerical values and furnishing a corresponding filtered value.

The present invention with its objects and features will be described in detail with reference to the drawing.

Figure 1 illustrates the algorithm underlying the known edge direction detector;

Figure 2 is a block diagram of a line interpolation system utilizing the edge direction detector operating in accordance with the algorithm of Fig. 1;

Figure 3 is a block diagram showing an edge-direction detector and postfilter according to the present invention connected in a sequential scan conversion system; and

Figure 4 is a schematic block diagram illustrating individual gradient filters according to the present invention.

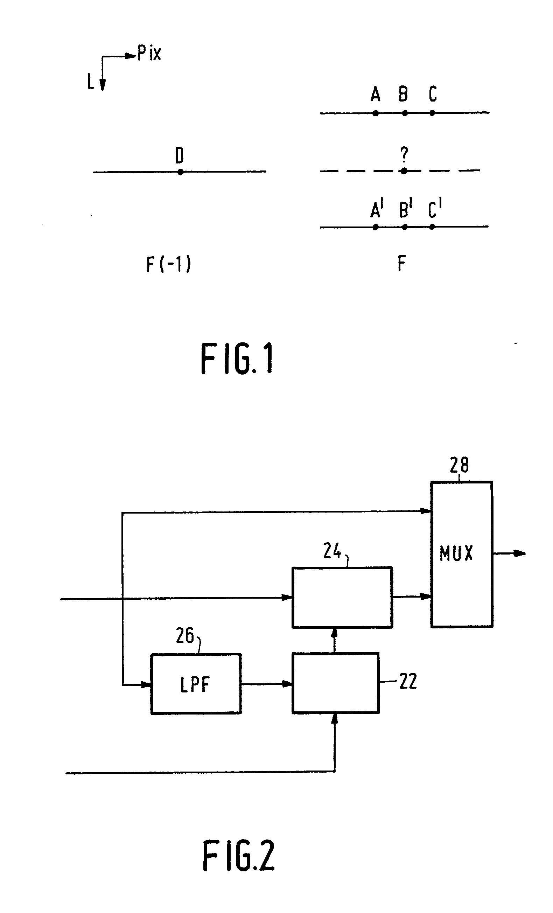

The solution proposed in the above-mentioned article "Progressive Scan Conversion Using Edge Information" to reduce the serration effect generated by use of a median filter is to detect the direction in which the edge extends and to vary the interpolation algorithm in accordance with the detected direction. As illustrated in Figure 1, a 2 by 3 window in the current field was used and the magnitude of the differences A-C', C-A', and B-B' was determined, (difference signals), the smallest of these values being assumed to indicate the direction of the edge. For indicated vertical edges, the median filter, in this reference, then operated on the two selected pixels from the present field, namely the pixels yielding the smallest difference as mentioned above, and the corresponding pixel D from the previous field. For other directions, the average value of the pair of pixels yielding the smallest absolute difference was used. As illustrated in Figure 2, which is a block diagram of the known system and is also derived from the above-mentioned article, a low-pass filter 26 filtering the input video data was added in order to make the direction selection less sensitive to high frequency input noise. The output of the edge detector 22 was applied to an interpolator 24 which received the input video signal directly.

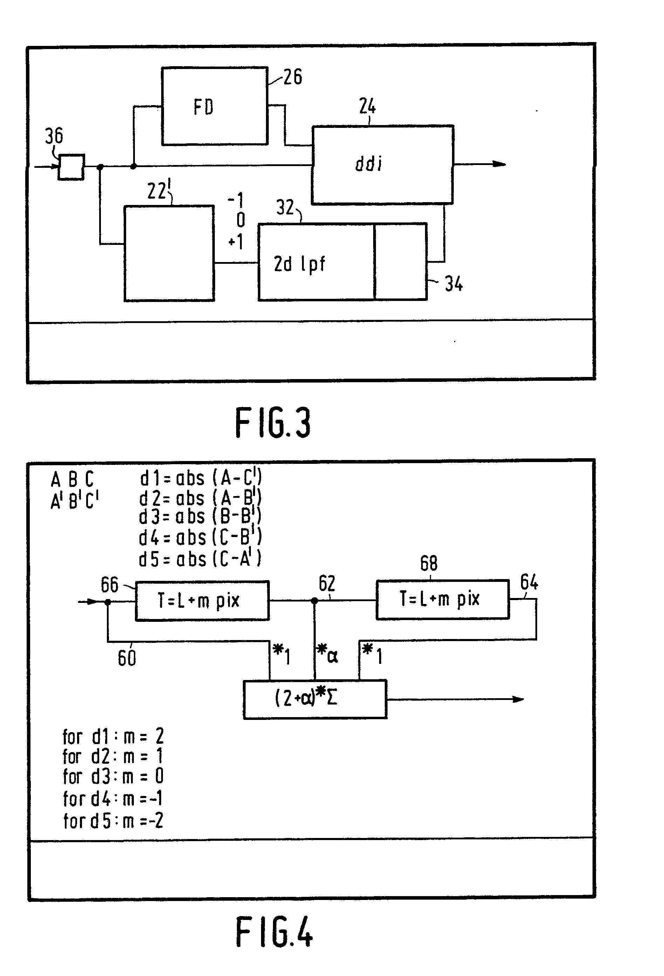

In the above-described system, visible artefacts are created by the high frequency switching at the output of the edge direction detector in image areas having fine detail. In accordance with the present invention, these are substantially decreased by use of the cascade circuit including an edge direction detector 22' and an output filter 32 illustrated in Fig. 3. As also shown in Fig. 3, the output of filter 32 is rounded off in a round-off stage 34. The output of round-off stage 34 is applied to an interpolator 24 which received the input video signal directly and via a field delay 26, as did the same-numbered interpolator in Fig. 2.

Edge direction detector 22' may operate as does detector 22 discussed above, or may take another form or yield additional outputs e.g. as disclosed in our application (GK 71493) filed simultaneously herewith entitled "Edge direction detector for image processing video systems". However, difference signals, each associated with a different direction, are calculated in stage 22' and the output of stage 22' signifies the direction associated with the minimum difference. Each output is assigned a numerical value between two end values. Here the end values are -2 and +2 and the intermediate outputs are assigned -1,0 and +1, respectively.

The above-described outputs are filtered in a, preferably two dimensional, low-pass filter 32, whose output is rounded in round-offstage 34. Filter 32 can consist of a simple transversal filter of three taps in the vertical and three taps in the horizontal direction, each with 1, 1, 1 coefficients, the two being connected in cascade.

The round-off in stage 34 can be used to build in a preference for a given direction by adjusting threshold circuits yielding the round-offs to cover different value ranges. In a preferred embodiment, the vertical direction covers twice the range of the other values, so that a distinct preference for vertical interpolation is built in.

The low-pass filtering described above has the obvious disadvantage of yielding less detailed edge information. An alternative embodiment of the present invention which decreases or prevents this loss makes use of a filter in which each absolute gradient (difference) value is filtered separately along the corresponding edge direction before the direction decision is made. Referring to Fig. 4, it will be noted that five filters are provided, each for one of the absolute gradients. The filters all have the same structure, namely three taps 60, 62, and 64, the first two being separated by a delay 66, the last two by a delay 68 (Fig. 4). Each delay is equal to one line plus the number of pixels (m pix) necessary so that the two delayed gradients together with the present gradient constitute a continuous edge if such an edge is actually present in the picture. Thus it is seen that for d1, the absolute gradient of A-C', the same edge will be continued for a gradient starting with pixel c' on the next line. Thus, again referring to Fig. 4, for $d = 1$, $m = 2$, yielding a delay of one line plus two pixels. Similarly, $m = O$ for d3 since d3 signifies a vertical edge which would be continued on the next line without a pixel delay. The choice of m for d2, d4 and d5 is based on the same considerations. The direction decision at the output of stage 22' is then the value assigned to the direction associated with the gradient filter having the lowest output. The advantage of the absolute gradient filters is that noise can be removed from the detector output without loss of decisions based on a real edge extending above a minimum length in the image.

While in the embodiment illustrated in Fig. 4 all gradients were filtered equally, it is possible to vary the degree of filtering from one gradient to the next. An optimum situation is expected to result if gradients which deviate more from the vertical are filtered more strongly. Errors in gradients closest to the horizontal result in the largest visible artefacts since the distance between samples selected for the subsequent interpolation is the largest. Stronger filtering in directions closer to the horizontal would mean that a decision has to be more consistent the more it deviates from the vertical.

A further simplification is possible, if the edge direction is not calculated at every sample position, but only at subsample positions. This is indicated by subsampling stage 36 in Fig. 3. A quincunx sampling pattern with a factor of 4 reduction of calculations has shown good results. Circuits for generating quincunx sampling patterns are well known as such, since they are utilized in HD MAC systems, as well as the Japanese MUSE systems. They will thus not be described in detail here. For this embodiment is is advisable to prefilter the picture.

The three filter options discussed herein, namely the video prefilter of the prior art, a decision postfilter and an absolute gradient filter, may be combined. In order to obtain the optimal combination, a progressive scan picture (625 lines/50 Hz/1:1) was converted to interlaced format by omitting odd, respectively even, lines in successive fields and then performing an upconversion by direction-dependent interpolation. Each result was compared with the original for a large number of filter combinations and averaged over three very different pictures. The mean square error criterion was used as an inverse quality indicator. For these conditions, and if only one filter is used, the absolute gradient filter yielded the best results. The decision postfilter performed significantly better than the video prefilter and at a slightly lower hardware expense, since less accuracy is required. It was further found that the advantages of the filters reinforce each other. Applying optimum filters together yields the best result.

We further found that motion compensation in the edge direction detector yields better results. However, the optimal solution with only one filter is then no longer the optimum in the combination. The best solution has no prefilter at all. Approximately the same results are obtained with only the decision postfilter or only the absolute gradient filter. A combination of the two is still advantageous.

Although the present invention has been described with reference to specific embodiments, many variations will readily occur to one skilled in the art and are intended to be encompassed in the following Claims.

## Claims

1. Video apparatus having an edge direction detector (22') calculating difference signals varying in accordance with differences in pixel values along respective predetermined directions, and furnishing at least a first and second edge direction signal each signifying the direction of a respective edge in a video image in dependence on said difference signals, characterized in that a first and second numerical value are assigned to said first and second edge direction signal, respectively,

   and at least one filter is provided for filtering said difference signals or said successive numerical values and furnishing at least one corresponding filtered signal.

2. Video apparatus as claimed in Claim 1, wherein the edge direction detector furnishes at least a first, second and third edge direction signal having an assigned first, second and third numerical value, respectively.

3. Video apparatus as claimed in Claim 1, wherein said at least one filter filters said successive numerical values.

4. Video apparatus as claimed in Claim 3, further comprising a round-off stage connected to the output of said at least one filter.

5. Video apparatus as claimed in Claim 4, wherein the round-off stage rounds off the filtered value to one of said first, second and third numerical values.

6. Video apparatus as claimed in Claim 1, wherein said second numerical value represents an edge direction closer to the vertical than to said first numerical values, and wherein said round-off stage favors said second numerical value.

7. Video apparatus as claimed in Claim 1, wherein the at least one filter comprises a plurality of filters equal in number to the plurality of edge direction signals, each for filtering a corresponding difference signal in the direction associated therewith.

8. Video apparatus as claimed in Claims 1-7, further comprising a presampling stage preceding said edge detector.

9. Video apparatus as claimed in Claim 8, wherein the presampling stage samples in a quincunx pattern.

10. Video apparatus receiving video signals for reproducing an image, characterized in that an edge direction detector receives the video signals and generates edge direction signals indicative of edges in the image, and a postfilter filters the edge direction signals.

11. Video apparatus as claimed in Claim 10, further comprising a prefilter filtering the video signal before application to the edge direction detector.

12. Video apparatus as claimed in Claim 10, further comprising a sampling stage sampling the video signal before application to the edge direction detector.

FIG.1

FIG.2

FD 26

36

24

ddi

22'

-1
0
+1

32

2d lpf

34

**FIG.3**

A B C     $d1 = abs(A-C')$
A' B' C'    $d2 = abs(A-B')$
          $d3 = abs(B-B')$
          $d4 = abs(C-B')$
          $d5 = abs(C-A')$

66

T=L+m pix

62

68

T=L+m pix

64

60

$*1$   $*\alpha$   $*1$

$(2+\alpha)*\Sigma$

for $d1: m = 2$
for $d2: m = 1$
for $d3: m = 0$
for $d4: m = -1$
for $d5: m = -2$

**FIG.4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 213 150   (ROBINSON et al.)<br>* Column 3, lines 58-60; column 4, lines 12-20; figure 1 * | 1-5,8,10 | H 04 N 5/44<br>H 04 N 5/14 |
| Y | | 6,7,9,11,12 | |
| Y | PATTERN RECOGNITION LETTERS, vol. 6, no. 1, June 1987, pages 27-32; J. KITTLER et al.: "An averaging edge detector"<br>* Page 31, left-hand column, paragraph 2 * | 6,7 | |
| A | IDEM | 1 | |
| Y,P | PATENT ABSTRACTS OF JAPAN, vol. 14, no. 421 (E-976)[4364], 11th September 1990;<br>& JP-A-2 162 888 (MATSUSHITA ELECTRIC IND. CO., LTD) 22-06-1990<br>* Abstract * | 9 | |
| Y | IDEM | 9 | |
| Y | ELECTRONICS WEEK, vol. 57, no. 18, 13th August 1984, pages 49-53, US; D.M. WEBER: "Digital circuits point to-wards better TV sets"<br>* Page 52, right-hand column, paragraph 4 - page 53, left-hand column, paragraph 1; figure 3 * | 11,12 | **TECHNICAL FIELDS SEARCHED (Int. Cl.5)**<br><br>H 04 N<br>G 06 F |
| A | IDEM | 1 | |

The present search report has been drawn up for all claims

| Place of search | Date of completion of search | Examiner |
|---|---|---|
| The Hague | 18 March 91 | DOCKHORN H.S.A. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

&: member of the same patent family, corresponding
   document